# EUROPEAN PATENT APPLICATION

(11) **EP 4 748 217 A1**
(43) Date of publication of application: **27.05.2026**
(21) Application number: 25213539.7
(22) Date of filing: 05.11.2025
(51) Int. Cl.: A01C 7/06, A01C 21/00

(54) **AGRICULTURAL SYSTEM AND COMPUTER IMPLEMENTED METHOD WITH SUCH**

(30) Priority: 21.11.2024 US 202418955472
(71) Applicant: Deere & Company, Moline, IL 61265 (US)
(72) Inventor: RUBY, JORDAN J, 68163 Mannheim (DE); MARX, SAMUEL E., 68163 Mannheim (DE)
(74) Representative: Reichert, Christian

(57) **Abstract**

An agricultural system (90) is disclosed. The agricultural system (90) comprising: a row unit (106) including a frame; a furrow opener (114) coupled to the frame of the row unit (106) and configured to open a furrow; a first applicator (109-1) on the row unit (106) configured to apply a first material to the furrow; a second applicator (109-2) on the row unit (106) configured to apply a second material to the furrow; and an application state control system (278) configured to obtain an application state defining a first application pattern and a second application pattern and to generate a first control signal (322) to control the first applicator (109-1) according to the first application pattern and to generate a second control (322) signal to control the second applicator (109-2) according to the second application pattern. Further, a computer implemented method comprising such an agricultural system (90) is disclosed.

## Description

### FIELD OF THE DESCRIPTION

The present description relates to agricultural machines. More specifically, the present description relates to controlling application of material to a field, using an agricultural machine.

### BACKGROUND

There is a wide variety of different types of agricultural machines that apply material to an agricultural field. Some such agricultural machines include air seeders, and planters that have row units, among others.

As one example, a row unit is often mounted to a planter with a plurality of other row units. The planter is often towed by a tractor over soil where seed is planted in the soil, using the row units. The row units on the planter follow the ground profile by using a combination of a down force assembly that imparts a down force to the row unit to push disk openers into the ground and gauge wheels to set depth of penetration of the disk openers.

Row units can also be used to apply material to the field (e.g., fertilizer to the soil, to a seed, etc.) over which the row units are traveling. In some scenarios, each row unit has a valve that is coupled between a source of material to be applied, and an application assembly. As the valve is actuated, the material passes through the valve, from the source to the application assembly, and is applied to the field.

Many current systems apply the material in a substantially continuous way. For instance, where the application machine is applying a liquid fertilizer, the application machine actuates the valve to apply a substantially continuous strip of the liquid fertilizer (sometimes referred to as a broadcast application pattern). The same is true of materials that provide other liquid substances, or granular substances, as examples.

The discussion above is merely provided for general background information and is not intended to be used as an aid in determining the scope of the claimed subject matter.

### SUMMARY

An application device on an agricultural machine includes a plurality of actuators that are controlled by a control system. Each actuator actuates a valve. When a furrow is opened, the control system controls the plurality of actuators, independently, to each apply a different liquid material in the furrow.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a top view of one example of a planting machine, shown in a partial pictorial and partial schematic form.
FIG. 2 shows a block diagram of one example of a portion of an agricultural system.
FIG. 3 shows a block diagram of one example of a portion of an agricultural system.
FIGS. 4A, 4B, 4C, 4D, 4E, 4F, 4G, 4H, and 4I are examples of application patterns corresponding to different application states.
FIG. 5 is a side view showing one example of a row unit of the planting machine illustrated in FIG. 1.
FIG. 6 is a side view showing another example of a row unit of the planting machine illustrated in FIG. 1.
FIG. 7 is a side view showing another example of a row unit of the planting machine illustrated in FIG. 1.
FIG. 8 is a perspective view of a portion of a seed metering system.
FIG. 9 shows an example of a seed delivery system that can be used with a seed metering system.
FIG. 10 shows another example of a delivery system that can be used with a seed metering system.
FIG. 11 is a view of an application unit.
FIGS. 12A and 12B (collectively referred to as FIG. 12) show a block diagram showing one example of a material application control system.
FIGS. 13A and 13B (collectively referred to as FIG. 13) show a flow diagram illustrating one example of the operation of the material application control system shown in FIG. 12.
FIG. 14 shows one example of the architecture illustrated in FIG. 1, deployed in a remote server environment.
FIGS. 15, 16, and 17 show examples of mobile devices that can be used as operator interface mechanisms in the architectures shown in the previous Figures.
FIG. 18 is a block diagram showing one example of a computing environment that can be used in the architectures shown in the previous Figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, many current systems apply material to a field. Some systems that apply material to a field include a set of actuators that actuate a set of valves or nozzles. The material to be applied to the field (which may be liquid) is pumped from a tank to the valves or nozzles through supply lines. A control system controls the actuators to actuate the valves or nozzles (to open and/or close the valves or nozzles) to allow the material under pressure to flow through the valves or nozzles onto the field.

In one example, there are multiple different actuators, that each control a separate valve, to apply material in a furrow. It can be difficult to control the multiple actuators to apply different materials in a furrow so that the application patterns are synchronized with one another.

The present description thus proceeds with respect to a system that uses an integrated control system to control a plurality of actuators. An application state selector selects an application state that defines an application pattern for each of the plurality of actuators. The integrated control system then controls the plurality of actuators to apply materials to a furrow according to the different application patterns, based on the selected application state.

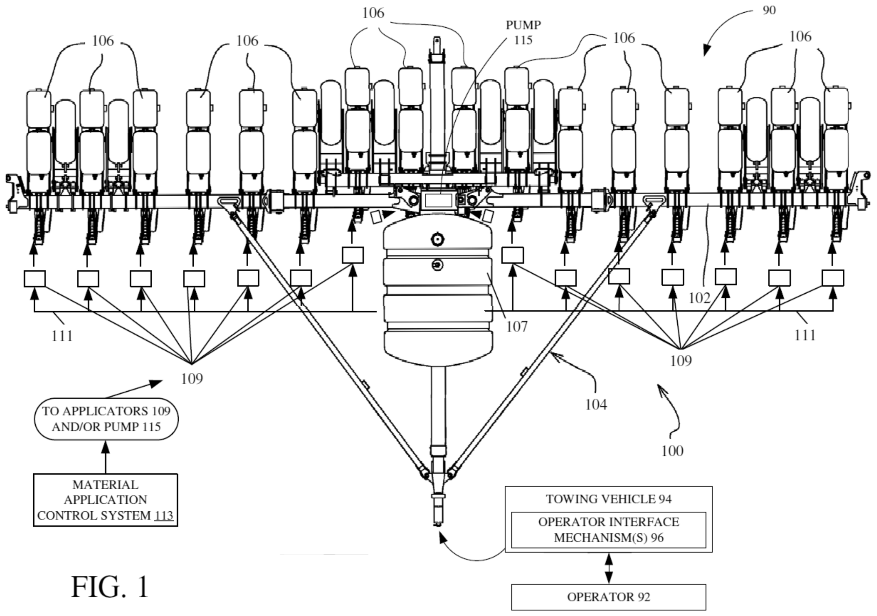

FIG. 1 is a partial pictorial, partial schematic top view of one example of an agricultural system 90 that includes agricultural planting machine 100, towing vehicle 94, that is operated by operator 92, and material application control system 113, which can be on one or more individual parts of machine 100, centrally located on machine 100, remotely located, or located on towing vehicle 94. Operator 92 (which can be a manual operator or an automated operator or a semi-automated operator) can illustratively interact with operator interface mechanisms 96 to manipulate and control vehicle 94, system 113, and some or all portions of machine 100.

Machine 100 is a row crop planting machine that illustratively includes a toolbar 102 that is part of a frame 104. FIG. 1 also shows that a plurality of planting row units 106 are mounted to the toolbar 102. Machine 100 can be towed behind towing vehicle 94, such as a tractor. FIG. 1 shows that material can be stored in a tank 107 (or material(s) can be stored in a plurality of tanks) and pumped through one or more supply lines 111 so the material can be dispensed or applied in or near the rows being planted. In one example, a set of applicators 109 is provided to perform the application operation. For instance, applicators 109 can include individual pumps that service individual row units 106 and that pump material from tank(s) 107 through supply line(s) 111 so the material(s) can be dispensed on the field. In such an example, material application control system 113 controls the pumps. Also, applicators 109 can include actuators that actuate valves or nozzles and one or more pumps 115 pump the material from tank(s) 107 to the valves or nozzles through supply line(s) 111. In such an example, material application control system 113 receives an application state indicator indicative of an application state and controls the actuators by generating actuator control signals to apply material according to desired application patterns, e.g., to apply a continuous strip of material, to apply material in an overlapping pattern, to apply material in a spaced pattern (e.g. on a per-seed basis between seeds or on seeds), based on the selected application state, or in other ways.

The application state indicator may depend on various criteria and/or may be received from an operator or automatically identified. For instance, the desired application state may be based on the types of material being applied, the crop type or hybrid, the soil or other field conditions, the location of the row unit, or other environmental conditions. Further, the desired application state may be obtained from a map or obtained in other ways.

The control signal for each actuator can, in one example, be a pulse width modulated control signal. The flow rate through the corresponding valve or nozzle can be based on the duty cycle of the control signal (which controls the amount of time the valve is open and closed) and based on the switching frequency. Further, the material can be applied at varying rates on a per-seed or per-plant basis. For example, fertilizer may be applied at one rate when it is being applied at a location spaced from a seed location and at a second, higher, rate when the material is being applied closer to the seed location. Thus, the switching frequency of the control signal can be varied to apply material according to the desired application pattern. Also, in one example, the ground speed of towing vehicle 94 or planter 100 can be detected and the switching frequency of the control signal can be varied based on the detected ground speed to maintain the desired application pattern at different speeds. Also, in one example, multiple applicators 109 are provided on each row unit 106 and one control system controls the multiple applicators 109 so that one or more materials can be applied by one applicator 109 relative to the furrow according one application pattern (e.g., continuously) and by another applicator 109 according to another application pattern (e.g., intermittently) or at a second rate. These are examples only.

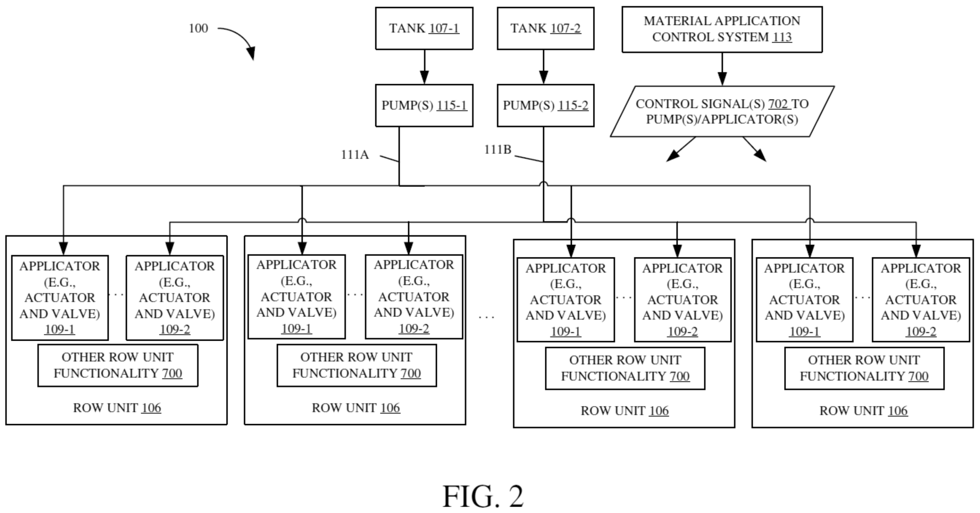

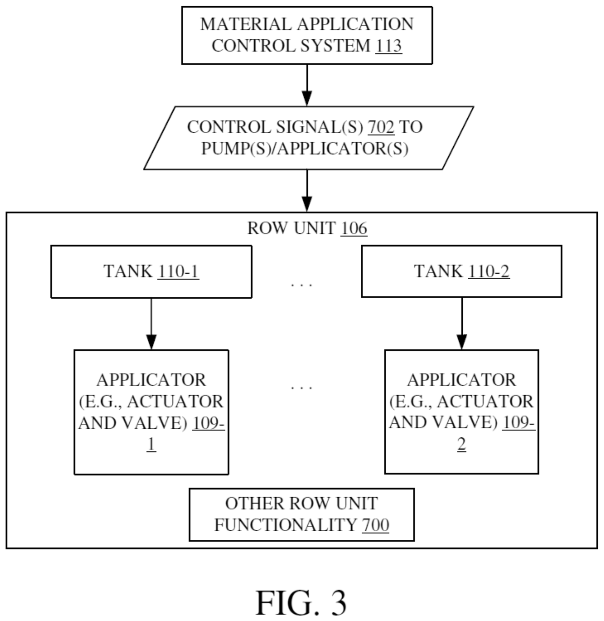

FIGS. 2 and 3 show different architectures in which applicators 109 can be disposed in different places, in which there can be multiple different materials applied by each row unit 106, and/or in which each material can be applied, using one or more different applicators to apply that material at different rates in the field location (e.g., in the same furrow). Tank 107-1 holds a first material that is pumped by one or more pumps 115-1 through a plurality of different supply lines 111A to a plurality of different applicators 109-1 (e.g., an actuator and a valve or nozzles) on each row unit 106. A second material is pumped by pump 115-2 from tank 107-2 through supply lines 111B to each of a plurality of different applicators 109-2 or each row unit 106. Thus, each row unit 106 shows a plurality of applicators 109 (labeled 109-1 to 109-2), along with other row unit functionality 700 some of which is described in greater detail elsewhere herein.

FIG. 2 also shows that material application control system 113 can generate control signals 702 which are provided to control the different applicators 109-1, 109-2 on the different row units 106. Therefore, material application control system 113 can generate control signals 702 with different switching frequencies to independently control the individual applicators 109-1 and 109-2 independently of one another on each of the row units 106 so that the materials from tanks 107-1 and 107-2 can be applied according to a first application pattern (e.g., continuously in a furrow) using applicator 109-1 and according to a second application pattern (e.g., intermittently based upon seed position in the furrow) using applicator 109-2. Also, it will be appreciated that, in one example, the individual applicators 109-1 can be independently controlled with respect to one another so that applicator 109-1 on one row unit 106 may be controlled independently with respect to the applicator 109-1 on a different row unit. The same can be true of applicators 109-2.

Also, material application control system 113 can generate control signals 702 to independently control the pumps 115-1 through 115-2 and the applicators 109-1 through 109-2 so that the material from tank 107-1 can be applied in the furrow opened by a given row unit 106 at one rate or according to one application pattern while the material in tank 107-2 can be applied by the same row unit 106 at a second rate or according to a second application pattern. Again, for example, the material in tank 107-1 can be applied continuously while the material from tank 107-2 can be applied intermittently, or vice versa.

It will also be noted that, in one example, a material may be created on-the-fly during runtime. For instance, in FIG. 2, supply lines 111A and 111B can both come from pump 115-1 so that both supply lines 111A and 111B are delivering material from tank 107-1. However, material from tank 107-2 can then be injected into supply line 111B so that applicators 109-1 will be applying material from tank 107-1 while applicators 109-2 will be applying material that is a combination of material from tank 107-1 and the material injected from tank 107-2. As one example, tank 107-1 may contain fertilizer while tank 107-2 contains pesticide in which case applicators 109-1 will be applying fertilizer while applicators 109-2 will be applying fertilizer combined with pesticide. This is just one example.

FIG. 3 shows an arrangement in which each row unit 106 has a plurality of tanks 110-1 through 110-2. Tank 110-1 may carry a different material from tank 110-2. The material from tank 110-1 can be applied using applicator 109-1 while the material from tank 110-2 can be applied using applicator 109-2. Therefore, material application control system 113 can generate control signals 702 to control the applicators 109-1 through 109-2 independently of one another such that the different materials (stored in tanks 110-1 through 110-2) can be applied at different rates or according to different application patterns with respect to one another.

In one example, material application control system 113 receives an application state indicator that identifies an application state, which defines the application patterns to be applied by each applicator 109-1 and 109-2. Control system 113 then generates controls signals 702 to control applicators 109-1 and 109-2 to apply material to a furrow, in synchronization with one another, based on the application state indicators.

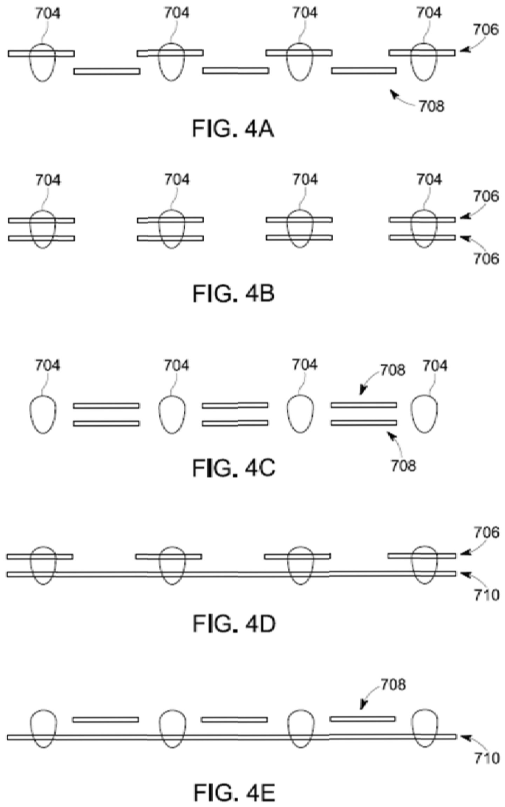

FIGS. 4A-4I show patterns associated with different application states. FIG. 4A shows an application state in which applicator 109-1 applies material, according to an application pattern 706, intermittently on seeds 704, and in which applicator 109-2 applies material according to an application pattern 708, intermittently between seeds.

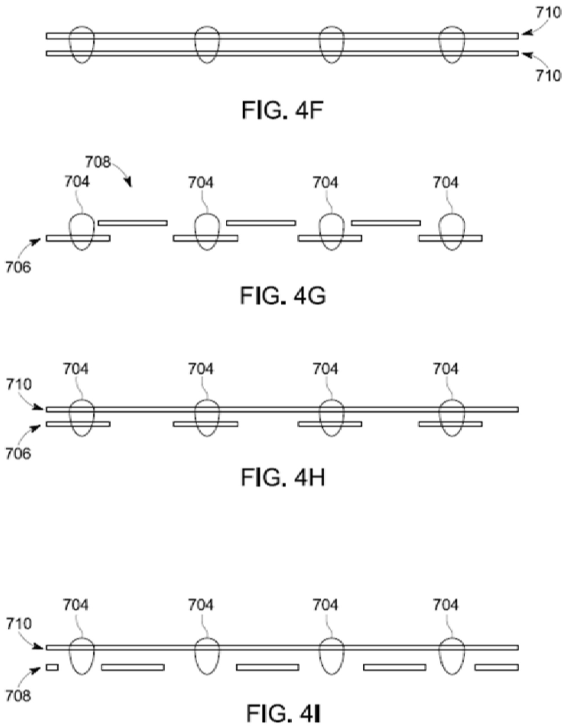

FIG. 4B shows an application state in which applicator 109-1 applies material according to an application pattern 706, intermittently on seeds 704, and in which applicator 109-2 also applies material according to application pattern 706 intermittently on seeds 704. FIG. 4C shows an application state in which both applicators 109-1 and 109-2 are controlled to apply material according to application pattern 708, between seeds 704. FIG. 4D shows an application state in which applicator 109-1 applies material according to application pattern 706 and in which applicator 109-2 applies material according to an application pattern 710, which is a continuous application pattern. FIG. 4E shows an application state in which applicator 109-1 applies material according to application pattern 708 and in which applicator 109-2 applies material according to the application pattern 710. FIG. 4F shows an application state in which both applicators 109-1 and 109-2 apply material according to the application pattern 710. FIG. 4G shows an application state in which applicator 109-1 applies material according to the application pattern 708 and in which applicator 109-2 applies material according to the application pattern 706. FIG. 4H shows an application state in which applicator 109-1 applies material according to the application pattern 710 and in which applicator 109-2 applies material according to the application pattern 706. FIG. 4I shows an application state in which applicator 109-1 applies material according to the application pattern 710 and in which applicator 109-2 applies material according to the application pattern 708.

The application states and corresponding application patterns shown in FIGS. 4A-4I are examples only. Other application states defining other application patterns can be used as well, such as by applying material continuously, but at an increased rate either on the seeds or between the seeds. Also, where additional applicators are provided on each row unit, then the additional applicators can be controlled to apply material according to a desired application pattern, resulting in additional application states (e.g., resulting in more combinations of application patterns).

The patterns can be used to accomplish a number of different objectives. For instance, the volume or quantity of material can be varied by varying the length of strips or bands of applied material. The applicators may also be variable rate applicators so the quantity of applied material can be varied by controlling the applicator as well.

Also, the location of the bands or strips of material relative to the seeds 704 can be set or defined in various ways. In one example, a band offset value can be set by the operator (the "operator" may be the human operator or by another system). The band offset value may define the offset between the center of the band and the center of the seed location so, for example, a band offset value of 0 means that the band of material will be centered on the seed, such as in patterns 706. In another example, where the band is not to touch the seed, the operator may set a minimum distance that the band will be from the seed. The operator may, for instance, specify the minimum separation distance that the band is separated from the seed. In one example, the operator may specify a minimum band start offset which indicates the minimum distance that the start of the band of material will be spaced from one seed. The operator may also specify a minimum band end offset which indicates the minimum distance that the end of the band of material will be spaced from the next subsequent seed.

Further, the operator may set an application rate which will correspond to a band length. In one example, the band length may be modified to adhere to the minimum band start offset and the minimum band end offset. The operator can be alerted to such a modification as well. Other ways of setting the location of the band(s) of material relative to the seed location(s) can be used as well. Those described are examples only.

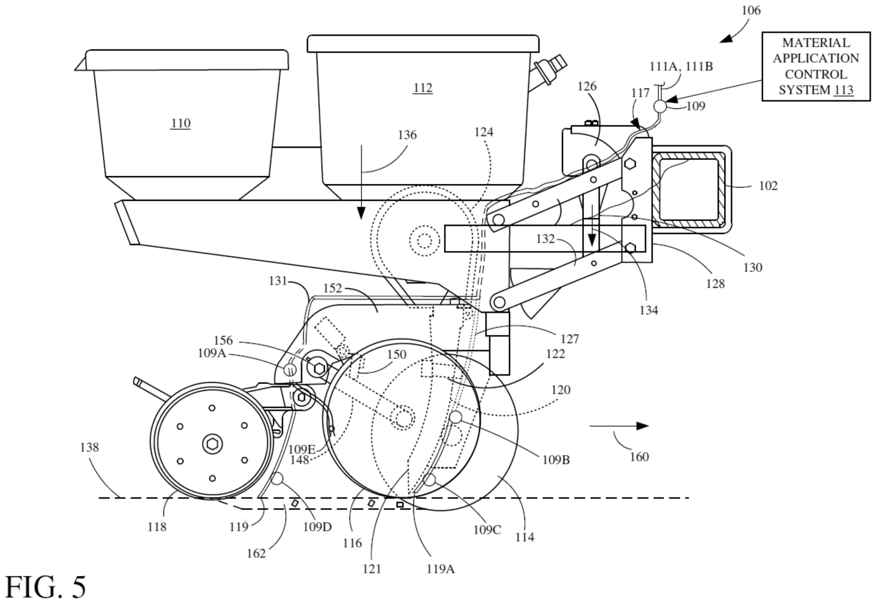

Some examples of the functionality on row units 106 will now be described with respect to FIGS. 5-11. FIG. 5 is a side view of one example of a row unit 106, with one or more applicators 109 and system 113 shown as well. FIG. 5 shows that an applicator 109 (e.g. applicator 109-1 and/or 109-2) can be in six possible locations labeled as 109, 109A, 109B, 109C, 109D, and 109E. It will be appreciated that row unit 106 will illustratively have a plurality of independently controllable applicators 109 (such as applicators 109-1 to 109-2 shown elsewhere herein) that receive material through supply lines 111A, 111B and that can each be located at one or more of the different locations indicated by numbers 109-109E or at other locations on row unit 106. Row unit 106 illustratively includes a chemical tank 110 and a seed storage tank 112. Row unit 106 also illustratively includes one or more disc openers 114, a set of gauge wheels 116, and a set of closing wheels 118. Seeds from tank 112 are fed into a seed meter 124, e.g., by gravity or from a centralized commodity distribution system (e.g., exploiting pneumatic commodity distribution to each row unit). The seed meter 124 controls the rate at which seeds are dropped into a seed tube 120 or other seed delivery system, such as a brush belt or flighted belt (shown in other FIGS.), from seed storage tank 112. The seeds can be sensed by a seed sensor 122.

In the example shown in FIG. 5 liquid material is passed, e.g., pumped or otherwise forced, through one or more supply lines 111A, 111B to an inlet end of each applicator 109. Each applicator 109 is controlled by control system 113 to allow the liquid to pass from the inlet end of each applicator 109 to an outlet end. Material application control system 113 may sense the ground speed of row unit 106 (e.g., by sensing the ground speed of towing vehicle 94 or in another way) and may vary the switching frequency of the pulse width modulated control signal controlling each applicator 109 based on the ground speed to maintain a desired application pattern. One example of the application of material through an applicator 109 will be discussed but it will be appreciated that the row unit 106 may have a plurality of independently controllable applicators 109 so one or more materials can be applied according to application patterns defined by a selected application state, such as at different rates or according to different application patterns (e.g., continuously, overlapping, intermittently, etc.). By mentioning that the different applicators are independently actuated to apply material according to a different application pattern it is meant, for example, that one applicator is controlled to apply material at a different rate than another applicator, or that one applicator applies material according to one spatial pattern (such as continuously, or overlapping) that is different from a spatial pattern with which another applicator applies material (such as discontinuously or intermittently).

As liquid passes through each applicator 109, the liquid travels through an application assembly 117 from a proximal end (which is attached to an outlet end of each applicator 109) to a distal tip (or application tip) 119, where the liquid is discharged into a trench or furrow, or proximate a trench or furrow 162, opened by disc opener 114.

Some parts of row unit 106 will now be discussed in more detail. First, it will be noted that there are different types of seed meters 124, and the one that is shown is shown for the sake of example only and is described in greater detail below. However, in one example, each row unit 106 need not have its own seed meter. Instead, metering or other singulation or seed dividing techniques can be performed at a central location, for groups of row units 106. The metering systems can include finger pick-up discs and/or vacuum meters (e.g., having rotatable discs, rotatable concave or bowl-shaped devices), among others. The seed delivery system can be a gravity drop system (such as seed tube 120 shown in FIG. 5) in which seeds are dropped through the seed tube 120 and fall (via gravitational force) through the seed tube and out the outlet end 121 into the seed trench or furrow 162. Other types of seed delivery systems may be or may include assistive systems, in that the systems do not simply rely on gravity to move the seed from the metering system into the ground. Instead, such assistive systems actively assist the seeds in moving from the meter to a lower opening, where they exit or are deposited into the ground or trench. These can be systems that physically capture the seed and move the seed from the meter to the outlet end of the seed delivery system or they can be pneumatic systems that pump air through the seed tube to assist movement of the seed. The air velocity can be controlled to control the speed at which the seed moves through the delivery system. Some examples of assistive systems are described in greater detail below with respect to other FIGS. A downforce actuator 126 is mounted on a coupling assembly 128 that couples row unit 106 to toolbar 102. Actuator 126 can be a hydraulic actuator, a pneumatic actuator, a spring-based mechanical actuator or a wide variety of other actuators. In the example shown in FIG. 5 a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on row unit 106 (and indicated by arrow 136) is offset by upwardly directed forces acting on closing wheels 118 (from ground 138) and disc opener 114 (again from ground 138). The remaining force (the sum of the force vectors indicated by arrows 134 and 136, minus the upward force on closing wheels 118 and opener 114 and the force on any other ground engaging component on the row unit (not shown), is the differential force. The differential force may also be referred to herein as the downforce margin. The downforce margin acts on the gauge wheels 116. This load can be sensed by a gauge wheel load sensor, which may be located anywhere on row unit 106 where it can sense that load. The gauge wheel load sensor can also be placed where it may not sense the load directly, but a characteristic indicative of that load. For example, the gauge wheel load sensor can be disposed near a set of gauge wheel control arms (or gauge wheel arm) 148 that movably mount gauge wheels 116 to shank 152 and control an offset between gauge wheels 116 and the discs in double disc opener 114, to control planting depth.

Arms (or gauge wheel arms) 148 illustratively abut against a mechanical stop (or arm contact member-or wedge) 150. The position of mechanical stop 150 relative to shank 152 can be set by a planting depth actuator assembly. Control arms 148 illustratively pivot around pivot point 156 so that, as the planting depth actuator assembly actuates to change the position of mechanical stop 150, the relative position of gauge wheels 116, relative to the double disc opener 114, changes, to change the depth at which seeds are planted.

In operation, row unit 106 travels generally in the direction indicated by arrow 160. The double disc opener 114 opens a furrow 162 in the soil 138, and the depth of the furrow 162 is set by planting depth actuator assembly, which, itself, controls the offset between the lowest parts of gauge wheels 116 and disc opener 114. Seeds are dropped through seed tube 120, into the furrow 162 and closing wheels 118 close the furrow 162, e.g., push soil back into the furrow 162.

As the seeds are dropped through seed tube 120, the seeds can be sensed by seed sensor 122. Some examples of seed sensor 122 may include an optical or reflective sensor, which includes a radiation transmitter component and a receiver component. The transmitter component emits electro-magnetic radiation and the receiver component then detects the radiation and generates a signal indicative of the presence or absence of a seed adjacent the sensors. In another example, row unit 106 may be provided with a seed firmer that is positioned to travel through the furrow 162, after seeds are placed in furrow 162, to firm the seeds in place. A seed sensor can be placed on the seed firmer and generate a sensor signal indicative of a seed.

The present description proceeds with respect to the seed sensor being located to sense a seed passing it in seed tube 120, but this is for the sake of example only. Material application control system 113 illustratively receives a signal from seed sensor 122, indicating that a seed is passing sensor 122 in seed tube 120. Where an intermittent application pattern is used, system 113 then determines when to actuate applicators 109-1 and 109-2 so that materials being applied through application assemblies 117 (and out distal tips 119 of application assemblies 117) will be applied at desired locations relative to the seed in trench or furrow 162. This is all described in greater detail elsewhere herein as well. One brief example will be described now, by way of overview.

Material application control system 113 illustratively receives or automatically identifies a desired application state and is programmed with, or detects a distance, e.g., a longitudinal distance, that each distal tip 119 for each applicator 109-1, 109-2 is from the exit end 121 of seed tube 120. System 113 also illustratively senses, or is provided (e.g., by another component, such as a GPS unit or a tractor, etc.), the ground speed of row unit 106. As the row units 106 on an implement being towed by a prime mover (e.g., a tractor) may move faster or slower than the tractor during turns, particularly as the width of the implement increases, the material application control system 113 may sense, compute, or be provided the ground speed of each row unit 106 of the implement. By way of example, the material application control system 113 may sense or be provided information when the implement is turning right indicating that the rightmost row unit 106 is travelling slower, i.e., has a lower ground speed, than the leftmost row unit 106. Further, the material application control system 113 detects, is provided, or is programmed with, system data indicating the responsiveness of applicators 109-1 and 109-2 under certain conditions (such as under certain temperature conditions, certain humidity conditions, certain elevations, when spraying a certain type of fluid, etc.) and the spray angle of applicators 109-1 and 109-2, (such as the size and orientation of the spray pattern emitted by applicators 109-1 and 109-2), and system 113 also detects, is provided, or programmed with one or more properties of the material being applied through applicators 109-1 and 109-2 (as this may affect the speed at which applicators 109-1 and 109-2 respond, the time it takes for the material to travel through application assemblies 117 to the distal tips 119 and be applied to furrow 162, etc.). Further, material application control system 113 illustratively detects (or is provided with a sensor signal indicative of) the forward speed of row unit 106 in the direction generally indicated by arrow 160. Application control system 113 can also obtain information indicative of the duty cycle used to control applicators 109-1 and 109-2.

With this type of information, once system 113 receives a seed sensor signal indicating that a seed is passing sensor 122 in seed tube 120, system 113 determines the amount of time it will take for the seed to drop through the outlet end of seed tube 121 and into furrow 162 to reside at its final seed location and position in furrow 162. System 113 then determines when each tip 119 will be in a desired location relative to that final seed location and actuates applicators 109-1 and 109-2 using, for example, a pulse width modulated control signal with a switching frequency (given the signal duty cycle) that will apply the material at the desired location. By way of example, it may be that some material is to be applied directly on the seed. In that case, system 113 times the actuation of actuator 109-1 so that the applied material will be applied at the seed location. In another example, it may be desirable to apply some material at the seed location and also a predetermined distance on either side of the seed location along the furrow. In that case, system 113 generates the control signal used to control applicators 109-1 and 109-2 at switching frequencies and timings so that the material is applied in the desired fashion. In other examples, it may be that the material is to be applied at a location between seeds in furrow 162. By way of example, relatively high nitrogen fertilizer may be most desirably applied between seeds, instead of directly on the seed. In that case, system 113 has illustratively been programmed with the desired location of the applied material (e.g., represented by the application state), relative to seed location, so that system 113 can determine when, and at what frequency, to generate the control signal to actuate applicators 109-1 and 109-2 in order to apply the material between seeds. Further, as discussed above, applicators 109-1 and 109-2 can be actuated to dispense material at a varying rate. Applicators 109-1 and 109-2 can dispense more material on the seed location and less at locations spaced from the seed location, or vice versa, or according to other application patterns defined by other application states. Different applicators 109-1 and 109-2 on the same row unit 106 can be independently controlled by a single, integrated control system 113 to apply the same or different materials according to the same or different application patterns. By integrated, it is meant for example, that the control system 113 uses a single algorithm to generate the control signals for the multiple applicators 109-1 and 109-2 so the multiple applicators 109-1 and 109-2 can be synchronized to apply materials as desired.

It will be noted that a wide variety of different configurations are contemplated herein. For instance, in one example, applicators 109-1 and 109-2 may each have a valve that is provided with material through a separate supply line 111A and 111B and may have a separate distal spray tips or nozzles 119. Each applicator 109-1 and 109-2 may be placed closer to the distal tips or nozzles 119 (such as indicated by applicator locations 109A and 109C). In this way, there is less uncertainty as to how long it will take the material to travel from the applicators 109A and 109C to the corresponding distal spray tips or nozzles 119. In yet another example, the applicators are disposed at a different location (such as on seed tube 120) as indicated by applicators 109B and 109D. In those scenarios, again, applicator locations 109B and 109D are closer to the corresponding distal tips or nozzles 119B and the material may be applied before and/or after the seed drops into furrow 162. For instance, when seed sensor 120 detects a seed, system 113 may be able to actuate applicator 109B to apply material to furrow 162, before the seed exits the exit end 121 of seed tube 120 while continuously actuating a separate applicator 109D which is fed material by a separate supply line 111 from applicator 109B. However, by the time the seed drops through distal end 121 of seed tube 120, the final seed location may be directly on the material applied by applicator 109B. In yet another example, system 113 can control applicator 109B so that it applies material, but then stops applying it before the seed exits distal end 121, again while actuating applicator 109D with a switching frequency to continuously apply material. In that case, the material may be applied continuously in the furrow 162 by applicator 109D and at a location behind the seed in furrow 162, relative to the direction indicated by arrow 160, by applicator 109B. This actuation timing and switching frequency enables the one or more materials to be applied between seeds, on seeds, continuously, overlapping, and/or elsewhere. All of these and other configurations are contemplated herein.

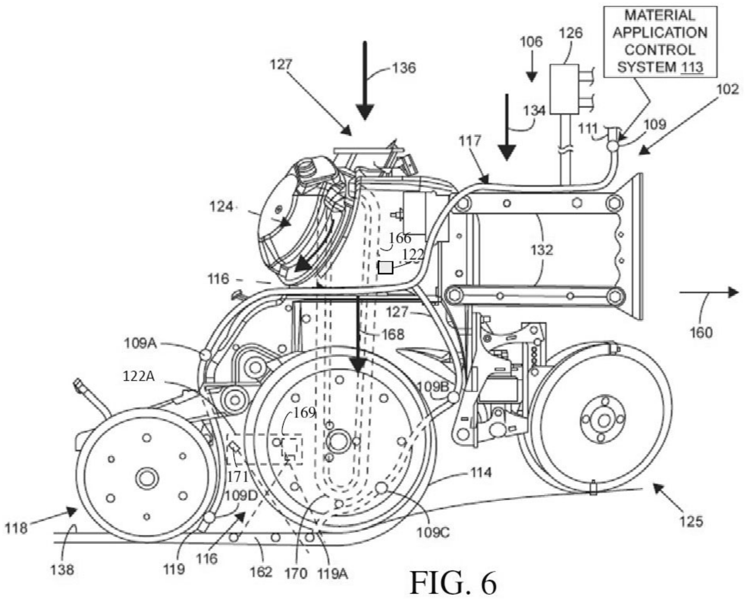

FIG. 6 is similar to FIG. 5, and similar items are similarly numbered. However, instead of the seed delivery system being a seed tube 120, which relies on gravity to move the seed to the furrow 162, the seed delivery system shown in FIG. 6 is an assistive seed delivery system 166. Also, FIG. 6 shows that row unit 106 has a row cleaner 125 which clears residue and other material ahead of opener 114. In FIG. 6, row unit 106 also has a seed hopper 127 that provides seed to seed meter 124. Assistive seed delivery system 166 also illustratively has a seed sensor 122 disposed therein.

Assistive seed delivery system 166 captures the seeds as they leave seed meter 124 and moves them in the direction indicated by arrow 168 toward furrow 162. System 166 has an outlet end 170 where the seeds exit assistive system 166, into furrow 162, where they again reach their final resting location.

FIG. 6 also shows that row unit 106 may have an optical seed sensor 122A (in addition to, or instead of, seed sensor 122) with an image capture device 169 and an illumination source 171. When the seeds are dropped into the furrow 162, the seeds can be sensed by seed sensor 122A. Illumination source 142 may direct illumination onto an area of furrow 162. Camera 169 captures an image (or a sequence of images) of the illuminated area. An image processing system (located on sensor 122A, material application control system 113, at a remote location, and/or elsewhere) processes the image(s) to identify planting characteristics, such as seed location, seed type, seed orientation, seed (or furrow) depth, seed spacing, seed-to-soil contact, furrow integrity, anomalous material (such as rocks, plant matter, etc.), and/or other planting characteristics. The optical seed sensor 122A can be placed in a variety of different locations on row unit 106, or on different components of row unit 106, to obtain an image (or a sequence of images) of seeds in the furrow 162.

In a system where seed sensor 122 is used, material application control system 113 considers the speed at which delivery system 166 moves the seed from seed sensor 122 to the exit end 170. The system 113 also illustratively considers the speed at which the seed moves from the exit end 170 into furrow 162. For instance, in one example the seed simply drops from exit end 170 into furrow 162 under the force of gravity. In another example, however, the seed can be ejected from delivery system 166 at a greater or lesser speed than that which would be reached under the force of gravity. Similarly, it may be that the seed drops straight downward into furrow 162 from the outlet end 170. In another example, however, it may be that the seed is propelled slightly rearwardly from the outlet end 170, to accommodate for the forward motion of the row unit 106, so that the travel path of the seed is more vertical and so the seed rolls less once it reaches the furrow. Further, the seed can be ejected rearwardly and trapped against the ground by a trailing member (such as a pinch wheel) which functions to stop any rearward movement of the seed, after ejection, and to force the seed into firm engagement with the ground. Again, FIG. 6 also shows that a plurality of applicators 109 can be placed at any of a wide variety of different locations, some of which are illustrated by numbers 109A, 109B, 109C, and 109D.

Where optical seed sensor 122A is used, material application control system 113 illustratively receives a signal from seed sensor 122A, indicating the planting characteristics discussed above, or other planting characteristics. Material application control system 113 can also receive a ground speed signal indicative of a speed of movement of row unit 106, and then determines when, and at what frequency, to independently actuate the different actuators in the applicators 109 on row unit 106 so that material being applied through application assemblies 117 (and out distal tips 119 of application assemblies 117) will be applied at a desired location relative to the seed in trench or furrow 162, or according to a desired application pattern, and/or based on other planting characteristics identified by processing the image(s) captured by optical seed sensor 122A. There can be a more than one seed sensor, seed sensors of different types, different locations for seed sensors, etc.

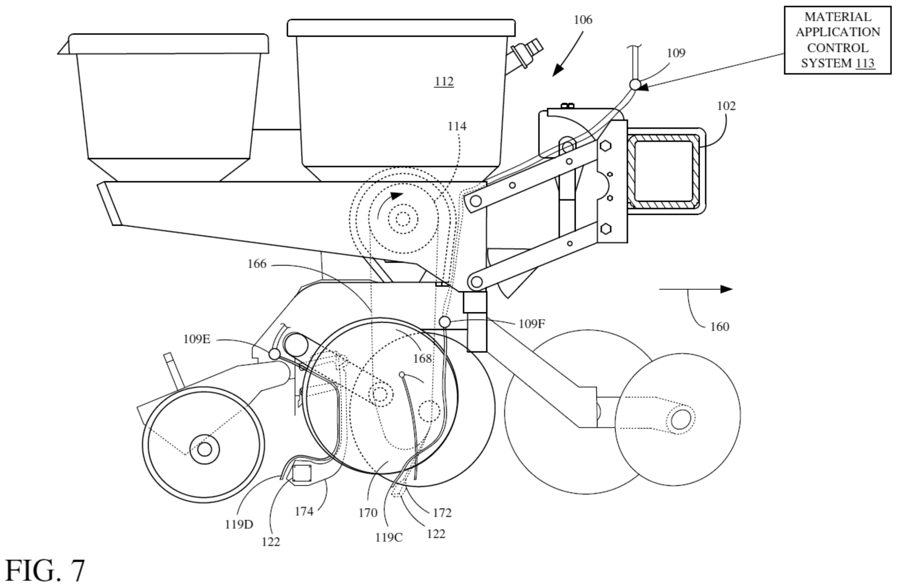

FIG. 7 is similar to FIG. 6 and similar items are similarly numbered. However, in FIG. 7, row unit 106 is also provided with members 172 and/or 174. Members 172 and/or 174 can be spring biased into engagement with the soil, or rigidly attached to the frame of row unit 106. In one example, member 172 can be a furrow shaper, which contacts the soil in the area within or closely proximate the furrow, and immediately after the furrow is opened, but before the seed is placed therein. Member 172 can thus contact the side(s) of the furrow, the bottom of the furrow, an area adjacent the furrow, or other areas. It can be fitted with a sensor 122 as well.

In another example, member 172 can be positioned so that member 172 moves through the furrow after the seed is placed in the furrow. In such an example, member 172 may act as a seed firmer, which firms the seed into its final seed location.

In either case, member 172 can include a seed sensor 122, which senses the presence of the seed. System 122 may be an optical sensor, which optically senses the seed presence as member 172 moves adjacent to, ahead of, or over the seed. Sensor 122 may be a mechanical sensor that senses the seed presence, or sensor 122 may be another type of sensor that senses the presence of the seed in the furrow. Sensor 122 illustratively provides a signal to material application control system 113 indicating the presence of the sensed seed.

In such an example, it may be that the plurality of applicators 109 on the row unit 106 are placed at the location of applicator 109E, shown in FIG. 7, and the outlet end or nozzle of the application assemblies corresponding to each applicator is shown at 119C. In the example shown in FIG. 7, outlet ends or nozzles 119C can be located closely behind member 172 relative to the direction indicated by arrow 160. Outlet ends or nozzles 119C can be disposed on the opposite side of member 172 as well (such as forward of member 172 in the direction indicated by arrow 160). In such an example, the seed sensor 122 senses the seed at a location that corresponds to its final seed location, or that is very closely proximate its final seed location. This may increase the accuracy with which seed sensor 122 senses the final seed location.

Also, in the example shown in FIG. 7, row unit 106 can have member 174 in addition to, or instead of, member 172. Member 174 can also be configured to engage the soil within, or closely proximate, the trench or furrow. Member 174 can have a seed sensor 122 that senses the presence of a seed (or a characteristic from which seed presence can be derived). Member 174 can be placed so that it closely follows the exit end 121 of the seed tube 120, or the exit end 170 of the assistive delivery system 166. Also, applicators 109 can be placed at the position illustrated at 109F.

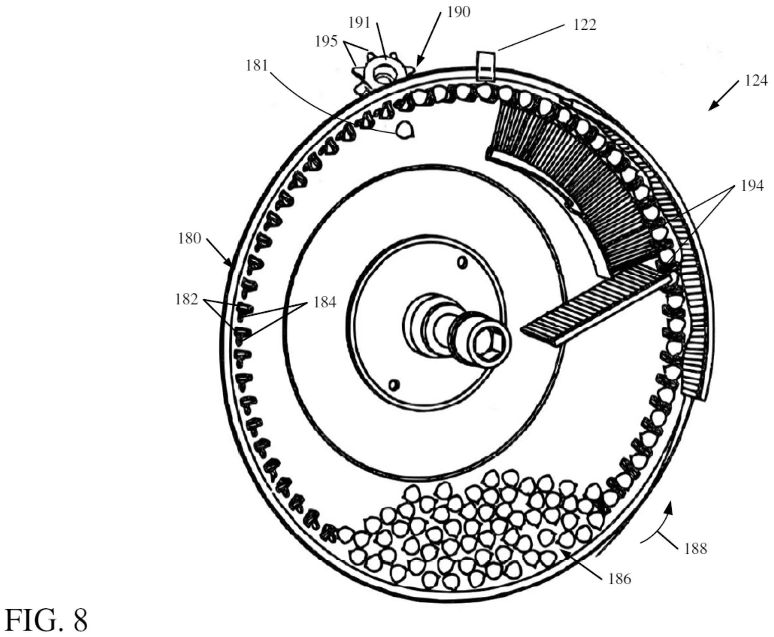

FIG. 8 shows one example of a rotatable mechanism that can be used as part of the seed metering system (or seed meter) 124. The rotatable mechanism includes a rotatable disc, or concave element, 180. Rotatable element 180 has a cover (not shown) and is rotatably mounted relative to the frame of the row unit 106. Rotatable element 180 is driven by a motor (not shown) and has a plurality of projections or tabs 182 that are closely proximate corresponding apertures 184. A seed pool 186 is disposed generally in a lower portion of an enclosure formed by rotating mechanism 180 and its corresponding cover. Rotatable element 180 is rotatably driven by its motor (such as an electric motor, a pneumatic motor, a hydraulic motor, etc.) for rotation generally in the direction indicated by arrow 188, about a hub. A pressure differential is introduced into the interior of the metering mechanism so that the pressure differential influences seeds from seed pool 186 to be drawn to apertures 184. For instance, a vacuum can be applied to draw the seeds from seed pool 186 so that they come to rest in apertures 184, where the vacuum holds the seeds in place. Alternatively, a positive pressure can be introduced into the interior of the metering mechanism to create a pressure differential across apertures 184 to perform the same function.

Once a seed comes to rest in (or proximate) an aperture 184, the vacuum or positive pressure differential acts to hold the seed within the aperture 184 such that the seed is carried upwardly generally in the direction indicated by arrow 188, from seed pool 186, to a seed discharge area 190. It may happen that multiple seeds are residing in an individual seed cell. In that case, a set of brushes or other members 194 that are located closely adjacent the rotating seed cells tend to remove the multiple seeds so that only a single seed is carried by each individual cell. Additionally, a seed sensor 122 can also illustratively be mounted adjacent to rotating element 180. Seed sensor 122 generates a signal indicative of seed presence and the signal may be used by system 113.

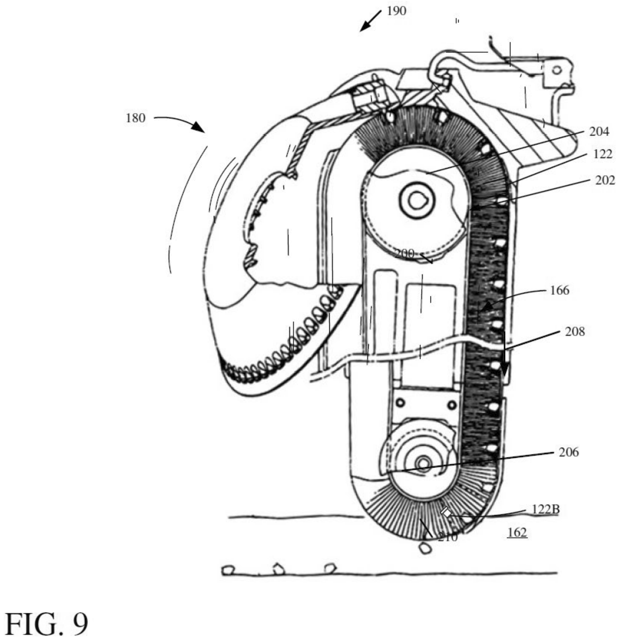

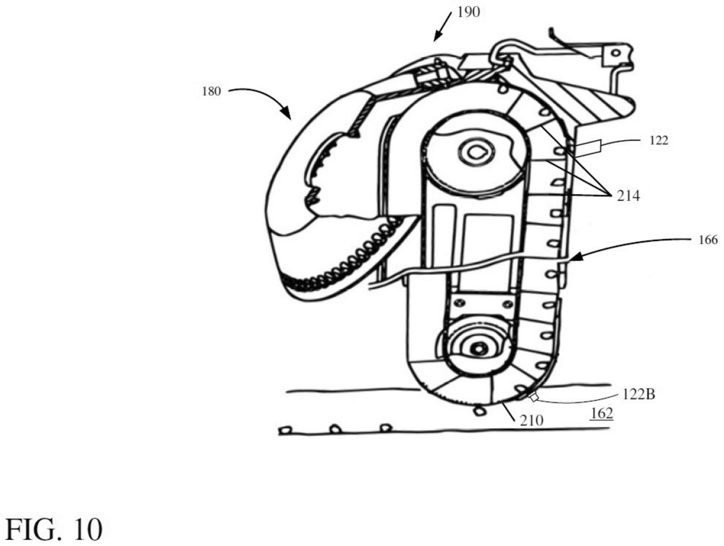

Once the seeds reach the seed discharge area 190, the vacuum or other pressure differential is illustratively removed, and a positive seed removal wheel or knock-out wheel 191, can act to remove the seed from the seed cell. Wheel 191 illustratively has a set of projections 195 that protrude at least partially into apertures 184 to actively dislodge the seed from those apertures. When the seed is dislodged (such as seed 181), the seed is illustratively moved by the seed tube 120, seed delivery system 166 (some examples of which are shown above in FIGS. 5-7 and below in FIGS. 9 and 10) to the furrow 162 in the ground.

FIG. 9 shows an example of a seed metering system and a seed delivery system, in which the rotating element 180 is positioned so that its seed discharge area 190 is above, and closely proximate, seed delivery system 166. In the example shown in FIG. 9, seed delivery system 166 includes a transport mechanism such as a belt 200 with a brush that is formed of distally extending bristles 202 attached to belt 200 that act as a receiver for the seeds. Belt 200 is mounted about pulleys 204 and 206. One of pulleys 204 and 206 is illustratively a drive pulley while the other is illustratively an idler pulley. The drive pulley is illustratively rotatably driven by a conveyance motor, which can be an electric motor, a pneumatic motor, a hydraulic motor, etc. Belt 200 is driven generally in the direction indicated by arrow 208.

Therefore, when seeds are moved by rotating element 180 to the seed discharge area 190, where they are discharged from the seed cells in rotating element 180, they are illustratively positioned within the bristles 202 by the projections 182 that push the seed into the bristles 202. Seed delivery system 166 illustratively includes walls that form an enclosure around the bristles 202, so that, as the bristles 202 move in the direction indicated by arrow 208, the seeds are carried along with them from the seed discharge area 190 of the metering mechanism, to a discharge area 210 either at ground level, or below ground level within a trench or furrow 162 that is generated by the furrow opener 114 on the row unit 106.

Additionally, the seed sensor 122 is also illustratively coupled to seed delivery system 166. As the seeds are moved within bristles 202, sensor 122 can detect the presence or absence of a seed. It should also be noted that while the present description will proceed as having sensors 122 and/or 122A, it is expressly contemplated that, in another example, only one sensor is used. Or additional sensors can also be used. Similarly, the seed sensor 122, 122A shown in the FIGS. can be disposed at a different location, such as that shown at 122B. Having a seed sensor 122 closer to where the seed is ejected from the system can reduce error in identifying the final seed location. Again, there can be multiple seed sensors 122, 122A, different kinds of seed sensors, and they can be located at many different locations.

FIG. 10 is similar to FIG. 9, except that seed delivery system 166 does not include a belt with distally extending bristles. Instead, system 166 includes a flighted belt (transport mechanism) in which an endless or continuous member (e.g., a belt) has a set of paddles 214 that form individual chambers (or receivers), into which the seeds are dropped, from the seed discharge area 190 of the metering mechanism. The flighted belt moves the seeds from the seed discharge area 190 to the exit end 210 of the flighted belt, within the trench or furrow 162.

There are a wide variety of other types of delivery systems as well, that include a transport mechanism and a receiver that receives a seed. For instance, a delivery system can include a dual belt delivery system in which opposing belts receive, hold, and move seeds to the furrow, a rotatable wheel that has sprockets which catch seeds from the metering system and move them to the furrow, multiple transport wheels that operate to transport the seed to the furrow, and an auger, among others.

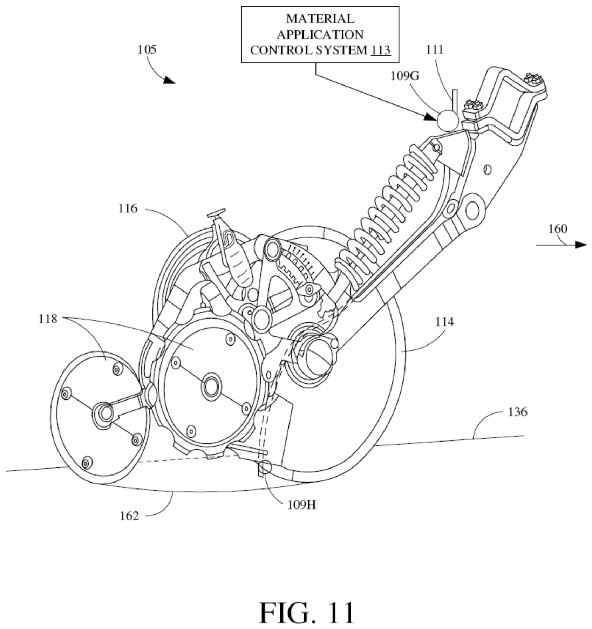

FIG. 11 is a side perspective view of an applicator unit 105. Some items are similar to those shown in other FIGS. and these items are similarly numbered. Briefly, in operation, applicator unit 105 attaches to a side-dress bar that is towed behind a towing vehicle 94, so unit 105 travels between rows (if the rows are already planted). However, instead of planting seeds, applicator unit 105 simply applies material at a location between rows of seeds (or, if the seeds are not yet planted, between locations where the rows will be, after planting). When traveling in the direction indicated by arrow 160, disc opener 114 (in this example, it is a single disc opener) opens furrow 162 in the ground 136, at a depth set by gauge wheel 116. Applicator unit 105 can have a plurality of independently controllable applicators 109. When applicators 109 are actuated, material is applied in the furrow 162 and closing wheels 118 then close the furrow 162.

As unit 105 moves, material application control system 113 controls applicators 109 to dispense material. This can be done relative to seed or plant locations, if those locations are sensed or are already known or have been estimated. Application can also be done before the seed or plant locations are known. In this latter scenario, the locations where the material is applied can be stored so that seeds can be planted later, relative to the locations of the material that has been already dispensed.

FIG. 11 shows that applicators 109 can be mounted to any of a plurality of different positions on unit 105. Two of the positions are shown at 109G and 109H. These are examples and the applicators 109 can be located elsewhere as well. Similarly, multiple applicators 109 can be disposed on unit 105 at different locations, or adjacent one another, to dispense multiple different materials or to dispense material in a more rapid or more voluminous way or to dispense the same material at different rates or according to different application patterns.

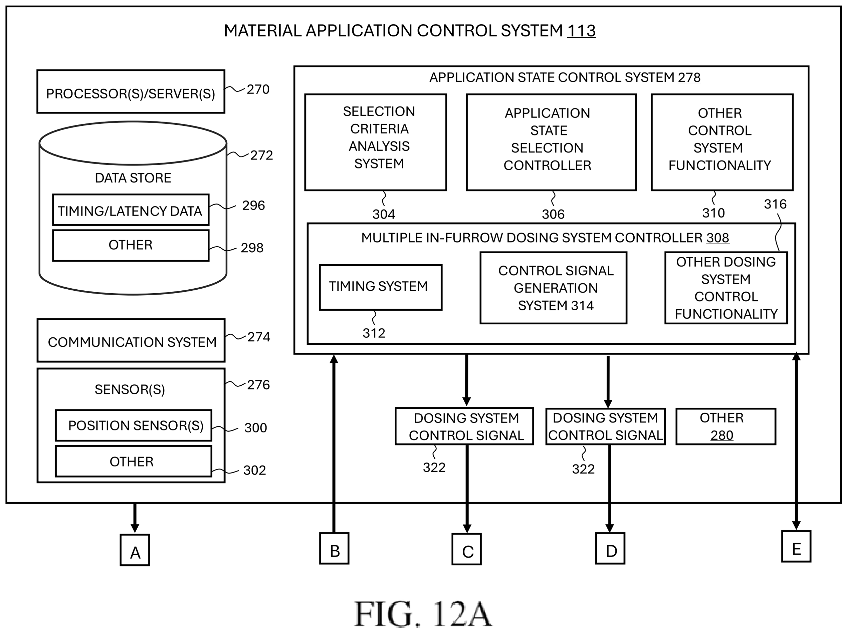

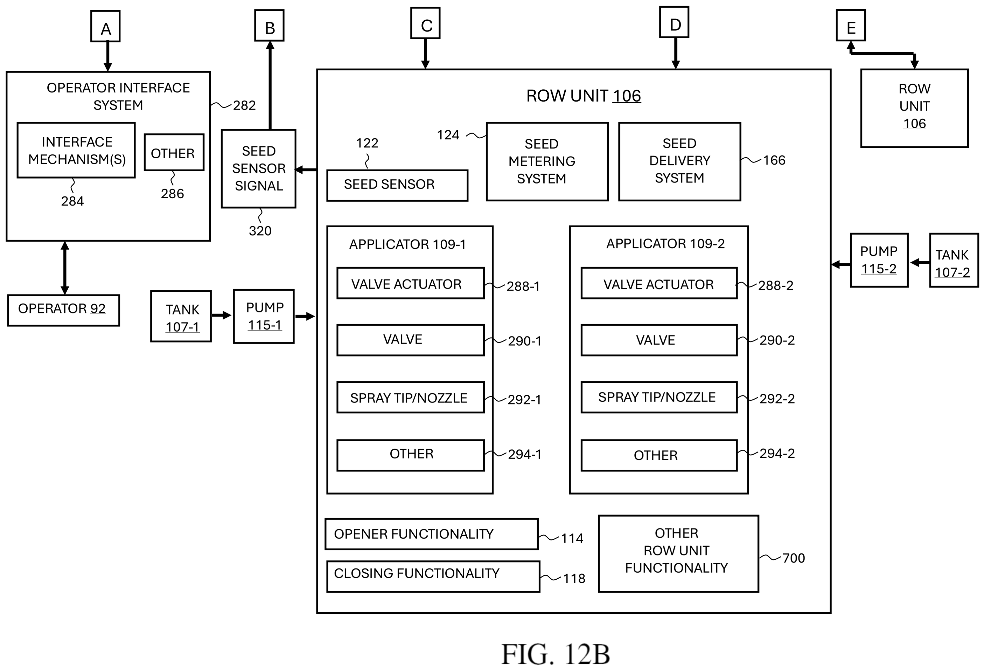

FIGS. 12A and 12B (collectively referred to as FIG. 12) illustrate a block diagram showing one example of material application control system 113 in more detail. It will be appreciated that different parts of material application control system 113 can be located in different locations, such as on a row unit, on a towing vehicle, in a remote server environment, or elsewhere. The material application control system 113 is shown in a single location in FIG. 12 for the sake of example only.

In the example shown in FIG. 12, material application control system 113 includes one or more processors or servers 270, data store 272, communication system 274, sensors 276, application state control system 278, and other functionality 280. FIG. 12 also shows that material application control system 113 can interact with an operator interface system 282 and a plurality of different row units 106. Operator interface system 282 can include a wide variety of different types of operator interface mechanisms 284 and other items 286. Mechanisms 284 can provide outputs to, and receive inputs from, operator 92. For instance, operator interface mechanisms 284 can include joysticks, a steering wheel, pedals, levers, knobs, buttons, etc. Interface mechanisms 284 can also include a display screen, user actuatable mechanisms on a display screen (such as links, icons, buttons, etc.) or any of a wide variety of other mechanisms that can be used to generate audio, visual, and/or haptic outputs to operator 92 and/or receive inputs from operator 92. Each applicator in row unit 106 includes a valve actuator 288-1, 288-2, a valve 290-1, 290-2, a spray tip or nozzle 292-1, 292-2, and/or other items 294-1, 294-2. Data store 272 can include timing/latency data 296, and other data 298. Sensors 276 can include position sensors 300, and any of a wide variety of other sensors 302. Application state control system 278 can include selection criteria analysis system 304, application state selection controller 306, multiple in-furrow dosing system controller 308, and other control system functionality 310. Multiple in-furrow dosing system controller 308 can include timing system 312, control signal generation system 314, and other dosing system control functionality 316. Before describing the overall operation of material application control system 113 in more detail, a description of some of the items in material application control system 113, and their operation, will first be provided.

Timing/latency data 296 can identify the latency corresponding to valve actuators 288, valves 290, and spray tips or nozzles 292 under different conditions (such as at different temperatures), and using different materials. Data 296 can include other timing and latency data for other items, such as the seed metering system 124, the seed delivery system 166, and/or other timing and latency data.

Communication system 274 facilitates communication among the items on material application control system 113 with one another and may also facilitate communication over a network with other systems and/or other machines. Therefore, communication system 274 may be a controller area network (CAN) bus and bus controller, a cellular communication system, a near field communication system, a wide area network communication system, a local area network communication system, a Wi-Fi or Bluetooth communication system, or any of a wide variety of other communication systems or combinations of communication systems. Sensors 276 can include a position sensor 300 which senses the position of sensor 300 in a global or local coordinate system and generates an output indicative of that location. Therefore, position sensor 300 may be a global navigation satellite system (GNSS) receiver, a cellular triangulation system, a dead reckoning system, or any of a wide variety of other position sensors. Other sensors 302 can include a ground speed sensor, seed sensor 122 (which is also shown on row unit 106), or any of a wide variety of other sensors.

Application state control system 278 accesses the timing/latency data 296 and receives the seed sensor signal 320 generated by seed sensor 122 on row unit 106 and/or any other sensor signals or other information that is needed to identify the target application state which defines the application patterns to be executed by the different applicators 109 on the different row units 106. Application state control system 278 then generates dosing system control signals 322 and 324 to control the valve actuators 288-1, 288-2 on the different applicators 109-1 and 109-2 on row unit 106, as well as to control the applicators on other row units 106. Application state control system 278 is a single integrated application control system that generates the dosing system control signals 322, 324 so that the different applicators 109 can be controlled in a synchronized fashion with respect to one another.

Selection criteria analysis system 304 can receive inputs indicative of the various selection criteria and/or receive an operator input from operator 192 which may be used to identify the target application state (such as one of the application states identified above with respect to FIGS. 4A-4I, or other application states). Selection criteria analysis system 304 can perform analysis on the selection criteria and generate an output indicative of that analysis to application state selection controller 302 which selects an application state. The selection criteria may include such things as the material being applied by the different applicators, the crops being treated, the soil conditions, environmental conditions, location, or other external conditions, and/or any of a wide variety of other criteria. The various criteria may be weighted, or arranged in a preference hierarchy or analyzed in other ways. Based upon the output from selection criteria analysis system 304, application state selection controller 306 selects an application state. The application state is output by application state selection controller 306 to multiple in-furrow dosing controller system 308.

Once the application state identifier is received, multiple in-furrow dosing system controller 308 generates the dosing system control signals 322, 324, in order to control the applicators 109-1, 109-2 to apply material based on the application state. Timing system 312 can access timing/latency data 296 to identify, based upon the seed sensor signal or other criteria, when to actuate the valve actuators 288-1, 288-2 in order to achieve the desired application patterns defined by the selected application state. Based upon the selected application state (which defines the application patterns for the different applicators 109-1, 109-2), control signal generation system 314 generates control signals 322, 324.

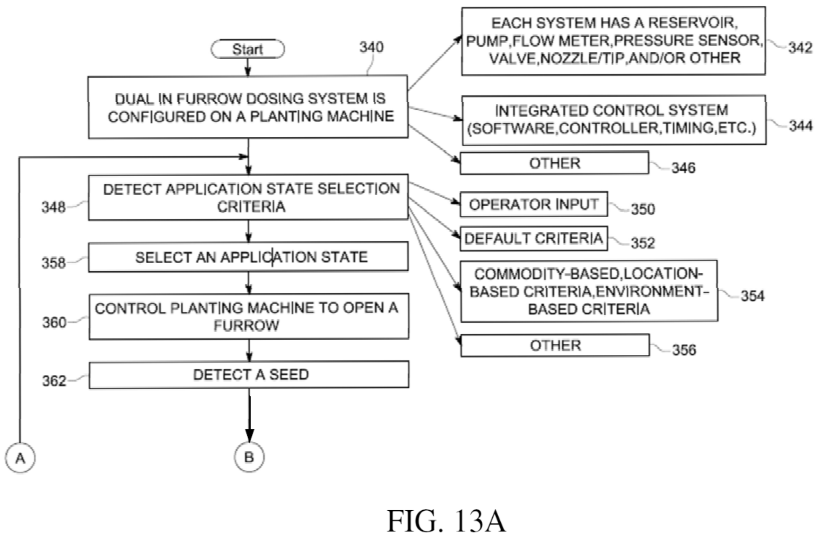

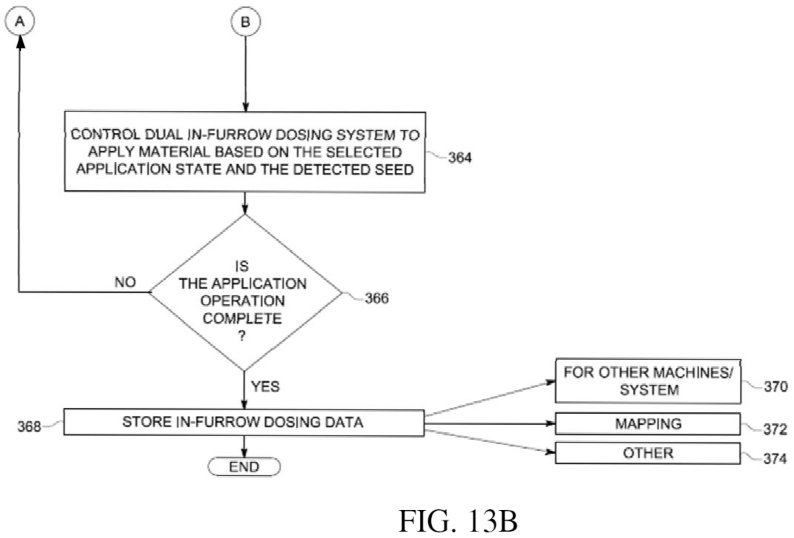

FIGS. 13A and 13B (collectively referred to as FIG. 13) shows a flow diagram illustrating one example of the operation of material application control system 113, in more detail. For purposes of the description of FIG. 13, it is assumed that a row unit 106 has two applicators 109-1 and 109-2. Therefore, application state control system 278 includes a dual in-furrow dosing system that is configured to control dual applicators 109-1, 109-2 to apply material in a furrow that is opened by row unit 106. Having a dual in-furrow dosing system configured on a planting machine is indicated by block 340 in the flow diagram of FIG. 13.

In one example, each of the dosing systems includes a separate reservoir or tank 107, pump 115, flow meter (which may measure flow out of pump 115), one or more pressure sensors which can sense pressure in the dosing system, a valve 290, a nozzle/spray tip 292, a valve actuator 288, and/or other items, as indicated by block 342 in the flow diagram of FIG. 13. The dosing systems are controlled by an integrated control system 278 which may include a software algorithm, a controller, and/or timing circuitry so that the dual applicators 109-1, 109-2 can be controlled in a synchronous way, as indicated by block 344. The dual in-furrow dosing system can be configured in other ways as well, as indicated by block 346.

Selection criteria analysis system 304 then detects application state selection criteria which can be used to select a desired application state. Detecting such criteria is indicated by block 348 in the flow diagram of FIG. 13. Such criteria can include an operator input 350, default criteria 352, commodity-based criteria, location-based criteria, and/or environment-based criteria, etc. 354, and/or any of a wide variety of other criteria 356. For example, the commodity-based criteria may identify the commodity being applied as well as its contents. The location-based criteria may include a geo-referenced prescription for applying material, the crop being treated at different locations, soil conditions at different locations, and/or other geo-referenced data. Environmental or other criteria can include weather conditions, field conditions, and/or other external or environmental conditions. Based upon the output of selection criteria analysis system 304, application state selection controller 306 selects an application state, as indicated by block 358. The application state defines the application patterns to be executed by the different applicators 109-1, 109-2.

Row unit 106 is controlled to open a furrow in the field, as indicated by block 360. Seed sensor 122 detects a seed and generates a seed signal, as indicated by block 362. Multiple in-furrow dosing system controller 308 generates control signals to control the applicators 109-1, 109-2 based on the selected application state and based on the seed sensor signal. Controlling the dual in-furrow dosing system to apply material based on the selected application state and based on the detected seed is indicated by block 364 in the flow diagram of FIG. 13.

Until the application operation is complete, as determined at block 366, operation reverts to block 348 where the application state selection criteria are again detected and analyzed (to ensure that the application state should not be changed).

When the application operation is complete, as determined at block 366, then the in-furrow dosing data can be stored, as indicated by block 368. The in-furrow dosing data can be communicated to other machines or other systems, as indicated by block 370, and can be used to generate a dosing map, as indicated by block 372. The in-furrow dosing data can be stored and/or processed in other ways as well, as indicated by block 374.

It can thus be seen that the present description describes a system that includes multiple dosing systems that are configured to apply material in a furrow. Those dosing systems can be independently controlled, by a single integrated control system, to apply material in a synchronized way, with respect to one another. An application state is identified based upon application state selection criteria and the application state defines the application patterns to be executed by the various applicators in the various dosing systems. The control system controls the applicators based upon the selected application state. This greatly enhances the accuracy with respect to which material can be applied relative to other materials and relative to target locations in the furrow. Further, materials that react antagonistically with respect to one another can also be applied with sufficient accuracy so as to avoid or minimize antagonistic reactions.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface (UI) displays have been discussed. The UI can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, sensors, and/or logic. It will be appreciated that such systems, components, generators, sensors, and/or logic can be comprised of hardware items (such as processors and associated memory, or other processing components, some of which are described below) that perform the functions associated with those systems, components, generators, sensors, and/or logic. In addition, the systems, components, generators, sensors, and/or logic can be comprised of software that is loaded into a memory and is subsequently executed by a processor or server, or other computing component, as described below. The systems, components, generators, sensors, and/or logic can also be comprised of different combinations of hardware, software, firmware, etc., some examples of which are described below. These are only some examples of different structures that can be used to form the systems, components, generators, sensors, and/or logic described above. Other structures can be used as well.

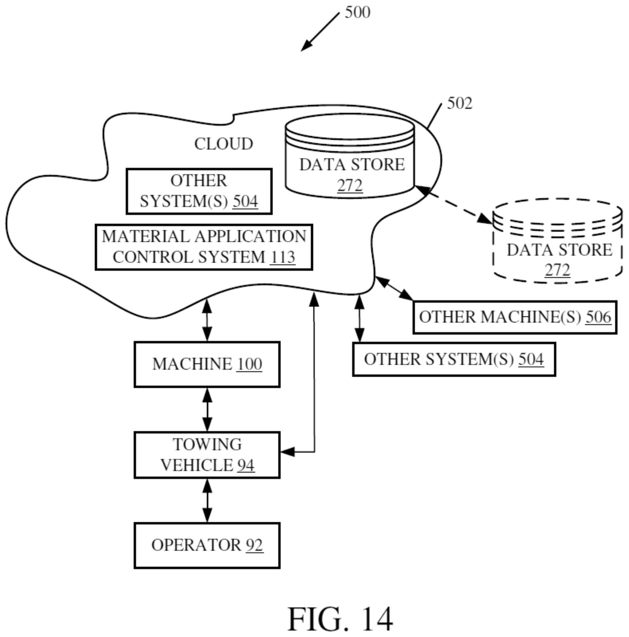

FIG. 14 is a block diagram of the architecture, shown in FIG. 1, except that planter 100 communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in FIG. 20 as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 14, some items are similar to those shown in previous FIGS. and they are similarly numbered. FIG. 14 specifically shows that material application control system 113 and data store 272 (or other items in agricultural system 90) can be located at a remote server location 502. Therefore, parts of system 113 can access those systems through remote server location 502. FIG. 14 also shows that other machines 506 and/or other systems 504 can communicate with remote server environment 502.

FIG. 14 also depicts another example of a remote server architecture. FIG. 14 shows that it is also contemplated that some elements of previous FIGS. can be disposed at remote server location 500 while others are not. By way of example, data store 272 can be disposed at a location separate from location 500, and accessed through the remote server at location 500. Regardless of where the elements are located, the elements can be accessed directly by system 113, through a network (either a wide area network or a local area network), the elements can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the planter or sprayer comes close to the fuel truck for fueling, the system automatically collects the information from the planter or sprayer using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the planter or sprayer until the planter or sprayer enters a covered location. The planter or sprayer, itself, can then send the information to the main network.

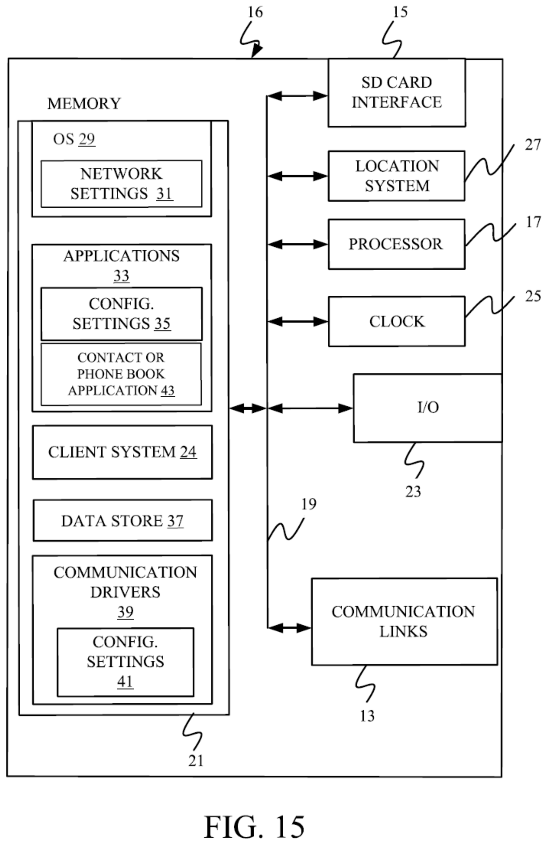

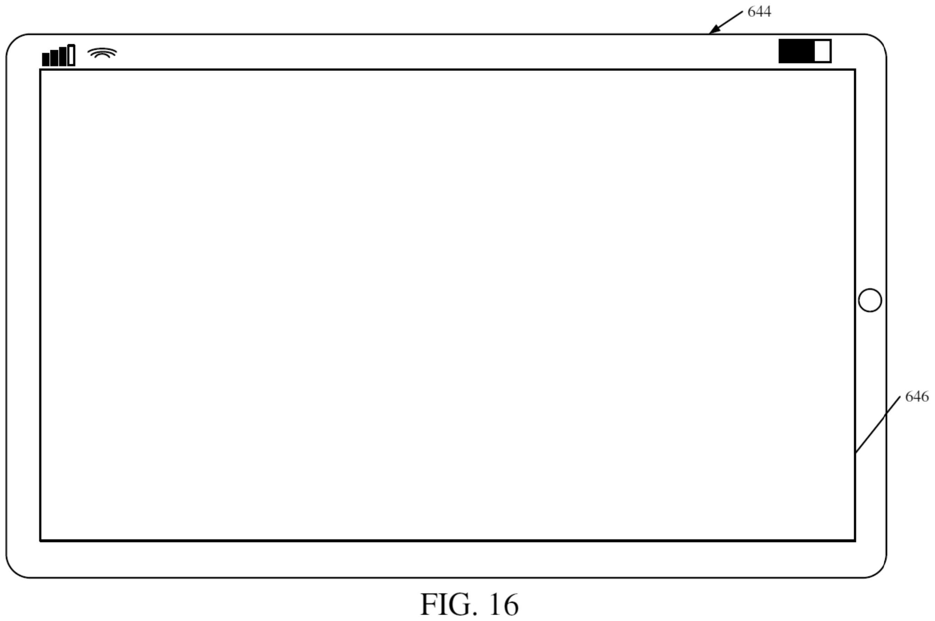

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc. FIG. 15 is a simplified block diagram of one illustrative example of a handheld or mobile computing device that can be used as a user's or client's handheld device 16, in which the present system (or parts of it) can be deployed. For instance, a mobile device can be deployed in the operator compartment of towing vehicle 94 for use in generating, processing, or displaying the application data. FIGS. 16-17are examples of handheld or mobile devices. FIG. 15 provides a general block diagram of the components of a client device 16 that can run some components shown in previous FIGS., that interacts with those components, or both. In the device 16, a communications link 13 is provided that allows the handheld device to communicate with other computing devices and in some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a GNSS, a dead reckoning system, a cellular triangulation system, or other positioning system. Location system 27 can also include, for example, mapping software or navigation software that generates desired maps, navigation routes and other geographic functions. Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 16 shows one example in which device 16 is a tablet computer 644. In FIG. 16, computer 644 is shown with user interface display screen 646. Screen 646 can be a touch screen or a pen-enabled interface that receives inputs from a pen or stylus. Computer 644 can also use an on-screen virtual keyboard. Of course, computer 644 might also be attached to a keyboard or other user input device through a suitable attachment mechanism, such as a wireless link or USB port, for instance. Computer 644 can also illustratively receive voice inputs as well.

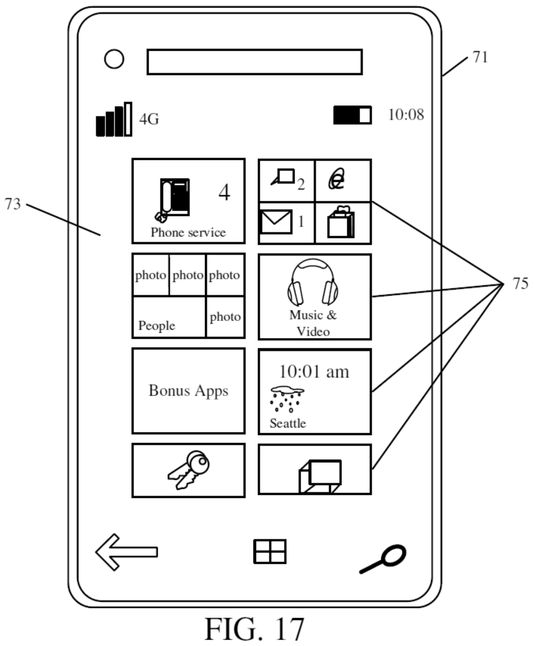

FIG. 17 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

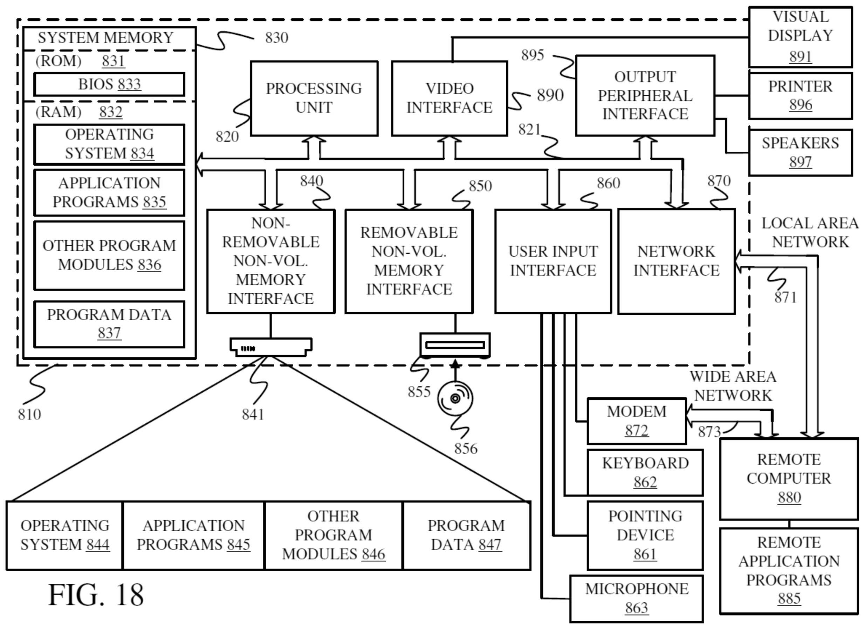

FIG. 18 is one example of a computing environment in which elements of previous FIGS., or parts of them, (for example) can be deployed. With reference to FIG. 18 an example system for implementing some embodiments includes a computing device in the form of a computer 810 programmed to operate as described above. Components of computer 810 may include, but are not limited to, a processing unit 820 (which can comprise processors or servers from previous Figures), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 18.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium, which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 18 illustrates operating system 834, application programs 835, other program modules 836, and program data 837.

The computer 810 may also include other removable/non-removable volatile/nonvolatile computer storage media. By way of example only, FIG. 18 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 18, provide storage of computer readable instructions, data structures, program modules and other data for the computer 810. In FIG. 18, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895. The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 18 illustrates, for example, that remote application programs 885 can reside on remote computer 880.

## Claims

1. An agricultural system (90), comprising:
a row unit (106) including a frame;
a furrow opener (114) coupled to the frame of the row unit (106) and configured to open a furrow;
a first applicator (109-1) on the row unit (106) configured to apply a first material to the furrow;
a second applicator (109-2) on the row unit (106) configured to apply a second material to the furrow; and
an application state control system (278) configured to obtain an application state defining a first application pattern and a second application pattern and to generate a first control signal (322) to control the first applicator (109-1) according to the first application pattern and to generate a second control (322) signal to control the second applicator (109-2) according to the second application pattern.

2. The agricultural system (90) of claim 1, and further comprising:
a seed sensor (122) configured to detect a seed and generate a seed sensor signal indicative of the detected seed.

3. The agricultural system (90) of claim 2, wherein the application state control system (278) is configured to generate the first and second control signals (322) based on the seed sensor signal.

4. The agricultural system (90) of one of the claims 1 to3, wherein the application state control system (278) comprises:
a selection criteria analysis system (304) configured to detect a set of selection criteria; and
an application state selection controller (306) configured to identify the application state based on the selection criteria.

5. The agricultural system (90) of claim 4, wherein the application state selection controller (306) is configured to identify the application state based on an operator input (350).

6. The agricultural system (90) of one of the claims 2 to 5, wherein the application state control system (278) comprises:
a timing system (312) configured to access timing data corresponding to the first applicator (109-1) and the second applicator (109-2); and
an in-furrow dosing system controller (308) configured to generate the first control signal (322) and the second control signal (322) based on the timing data, the seed sensor signal, and the application state.

7. A computer implemented method, comprising an agricultural system (90) according to one of the claims 1 to 6, the method further comprising:
Detecting (358) the application state defining the first application pattern and the second application pattern;
Controlling (360) the row unit (106) on an agricultural machine to open the furrow;
Controlling (364) the first applicator (109-1) on the row unit (106), with the control system (278), to apply a first material to the furrow according to the first application pattern based on the application state; and
Controlling (364) the second applicator (109-2) on the row unit (106), with the control system (278), to apply a second material to the furrow according to the second application pattern based on the application state.

8. The computer implemented method of claim 7, and further comprising:
detecting a seed, wherein controlling the first applicator (109-1) comprises controlling the first
applicator (109-1) to apply the first material based on the detected seed.

9. The computer implemented method of claim 7 or 8, wherein controlling the second applicator (109-2) comprises:
controlling the second applicator (109-2) to apply the second material based on the detected seed.

10. The computer implemented method of one of the claims 7 to 9, wherein detecting the application state comprises:
Detecting (348) a set of selection criteria; and
Identifying (358) the application state based on the set of selection criteria.

11. The computer implemented method of claim 10, wherein detecting the set of selection criteria comprises:
Accessing (354) material-based criteria indicative of interaction characteristics of the first material and the second material.

12. The computer implemented method of claim 10 or 11, wherein detecting the set of selection criteria comprises:
Accessing (354) environment-based criteria indicative of environmental characteristics of a field in which the first and second material are applied.

13. The computer implemented method of one of the claims 10 to 12, wherein detecting the set of selection criteria comprises:
Accessing (354) location-based criteria indicative of location characteristics of a field in which the first and second material are applied.

14. The computer implemented method of one of the claims 7 to 13, wherein detecting an application state comprises:
Detecting (350) an operator state input indicative of the application state.

15. The computer implemented method of one of the claims 7 to 13, wherein controlling the first applicator (109-1) comprises generating a first control signal (322) with a control algorithm to control the first applicator (109-1) and wherein controlling the second applicator (109-2) comprises generating a second control signal (322) with the control algorithm to control the second applicator (109-2).
